# EUROPÄISCHE PATENTSCHRIFT

(11) **EP 4 179 235 B1**
(45) Veröffentlichungstag und Bekanntmachung des Hinweises auf die Patenterteilung: **20.12.2023**
(21) Anmeldenummer: 21737044.4
(22) Anmeldetag: 25.06.2021
(51) Int. Cl.: F16H 63/34

(54) **PARKSPERRENVORRICHTUNG FÜR EIN FAHRZEUGGETRIEBE SOWIE FAHRZEUGGETRIEBE**
PARKING LOCK DEVICE FOR A VEHICLE TRANSMISSION, AND VEHICLE TRANSMISSION
DISPOSITIF DE VERROUILLAGE DE STATIONNEMENT POUR TRANSMISSION DE VÉHICULE ET TRANSMISSION DE VÉHICULE

(30) Priorität: 08.07.2020 DE 102020004107
(43) Veröffentlichungstag der Anmeldung: 17.05.2023
(73) Patentinhaber: Mercedes-Benz Group AG, 70372 Stuttgart (DE)
(72) Erfinder: HASENKAMP, Jan, 71573 Allmersbach im Tal (DE)
(74) Vertreter: Novagraaf Group
(86) Internationale Anmeldenummer: PCT/EP2021/067573
(87) Internationale Veröffentlichungsnummer: WO 2022/008270

(56) Entgegenhaltungen:
- EP-A1- 1 679 456
- JP-A- 2017 101 754
- JP-A- 2019 183 878
- US-A1- 2018 050 668

## Beschreibung

Die Erfindung betrifft eine Parksperrenvorrichtung für ein Fahrzeuggetriebe gemäß dem Oberbegriff von Patentanspruch 1. Des Weiteren betrifft die Erfindung ein Fahrzeuggetriebe.

Die DE 10 2015 008 709 A1 offenbart ein Parksperrenmodul zur Montage in ein Kraftfahrzeuggetriebe, mit zumindest einem axial verschiebbaren Betätigungskonus, der dazu vorgesehen ist, ein zum formschlüssigen Eingriff in ein Parksperrenrad vorgesehenes Sperrelement zu betätigen.

Die EP 1 679 456 A1, die DE 198 20 920 A1, die EP 3 067 591 A1 und die JP 2017 101754 A zeigen Parksperrenvorrichtungen mit einer Sperrklinke, einem Betätigungskolben zum Bewegen der Sperrklinke, einem Hubmagneten und mit einem Rasthebel zum Arretieren des Betätigungskolbens, be denen eine Schwenkachse des Rasthebels senkrecht zu einer Verschiebeachse des Betätigungskolbens angeordnet ist.

Die DE 10 2018 216 728 A1 und die DE 10 2012 004 157 A1 zeigen andererseits Parksperrenvorrichtungen mit einem Betätigungskolben, bei denen zwar kein um eine Schwenkachse drehbarer Rasthebel sondern eine andere Rastiereinrichtung vorgesehen ist, bei denen aber eine Wirkrichtung eines Hubmagneten, welcher mit der Rastiereinrichtung zusammenwirkt, parallel zu der Verschiebeachse des Betätigungskolbens angeordnet ist.

Aufgabe der vorliegenden Erfindung ist es, eine Parksperrenvorrichtung für ein Fahrzeuggetriebe sowie ein Fahrzeuggetriebe mit einer solchen Parksperrenvorrichtung zu schaffen, sodass der Bauraumbedarf der Parksperrenvorrichtung besonders geringgehalten werden kann. Vor allem soll die Parksperrenvorrichtung so gestaltet sein, dass ein Bauraumbedarf des Fahrzeuggetriebes, in dem die Parksperrenvorrichtung verwendet wird, gering gehalten werden kann.

Diese Aufgabe wird durch eine Parksperrenvorrichtung mit den Merkmalen des Patentanspruchs 1, sowie durch ein Fahrzeuggetriebe mit den Merkmalen des Patentanspruchs 8 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine einfach auch als Parksperre bezeichnete Parksperrenvorrichtung für ein Fahrzeuggetriebe, insbesondere vorgesehen für ein Kraftfahrzeug. Dies bedeutet, dass das Fahrzeuggetriebe in seinem vollständig hergestellten Zustand die Parksperrenvorrichtung aufweist. Beispielsweise weist das Fahrzeuggetriebe in seinem vollständig hergestellten Zustand eine Welle auf, welche von einem beispielsweise als Verbrennungskraftmaschine oder Elektromotor ausgebildeten Antriebsmotor des Kraftfahrzeugs angetrieben werden kann. Außerdem weist das Kraftfahrzeug, für welches das Fahrzeuggetriebe vorgesehen ist, wenigstens ein Rad auf, welches über die Welle von dem Antriebsmotor angetrieben werden kann. Dabei ist beispielsweise das Rad drehmomentübertragend mit der Welle verbunden oder zumindest verbindbar. Das Rad ist ein Bodenkontaktelement, über welches das Kraftfahrzeug in Fahrzeughochrichtung nach unten an einer Fahrbahn abstützbar oder abgestützt ist. Wird das Kraftfahrzeug beispielsweise entlang der Fahrbahn gefahren, während das Kraftfahrzeug in Fahrzeughochrichtung nach unten in über das Rad an der Fahrbahn abgestützt ist, so rollt das Rad direkt an der Fahrbahn ab. Dabei dreht sich das Rad relativ zu einem beispielsweise als selbsttragende Karosserie ausgebildeten Aufbau des Kraftfahrzeugs. Wie im Folgenden noch genauer erläutert wird, kann mittels der Parksperrenvorrichtung eine relativ zu dem Aufbau erfolgende Drehung der Welle und somit eine relativ zu dem Aufbau erfolgende Drehung des Rads verhindert werden, sodass beispielsweise das Kraftfahrzeug mittels der Parksperrenvorrichtung gegen ein unerwünschtes Wegrollen gesichert werden kann, insbesondere in Abhängigkeit von einer Park- oder Betriebsbremse des Kraftfahrzeugs. Dies ist insbesondere dann vorteilhaft, wenn das Kraftfahrzeug an einem Gefälle abgestellt, das heißt geparkt ist.

Das Kraftfahrzeug weist das Fahrzeuggetriebe auf, über welches das Rad von dem Antriebsmotor angetrieben werden kann. Dabei ist die Parksperrenvorrichtung beispielsweise in das Fahrzeuggetriebe integriert beispielsweise ein Bestandteil des insbesondere als Automatikgetriebe ausgebildeten Fahrzeuggetriebes. Die Welle ist dabei beispielsweise eine Welle des Fahrzeuggetriebes. Insbesondere kann die Welle eine Ausgangswelle des Fahrzeuggetriebes sein. Gibt die Parksperrenvorrichtung die Welle und somit das Rad frei, so können sich die Welle und das Rad relativ zu einem auch als Getriebegehäuse bezeichneten Gehäuse des Fahrzeuggetriebes drehen. Die Parksperrenvorrichtung kann jedoch die Welle und somit das Rad gegen einer relativ zu dem Getriebegehäuse erfolgende Drehung sichern, wodurch sich die Welle und das Rad nicht relativ zum Getriebegehäuse und nicht relativ zu dem Aufbau drehen können. Dadurch kann das Kraftfahrzeug gegen ein unerwünschtes Wegrollen gesichert werden.

Die Parksperrenvorrichtung weist dabei ein Parksperrenrad auf, welches drehfest mit der Welle des Fahrzeuggetriebes verbindbar beziehungsweise verbunden ist. Außerdem umfasst die Parksperrenvorrichtung eine Sperrklinke, welche relativ zu dem Parksperrenrad und beispielsweise relativ zu dem Getriebegehäuse zwischen wenigstens einer das Parksperrenrad gegen eine Drehung sichernden Sperrstellung und wenigstes einer das Parksperrenrad für eine Drehung freigebenden Freigabestellung bewegbar ist. Die Sperrklinke ist beispielsweise bewegbar an dem Getriebegehäuse gehalten. In der Sperrstellung kann die Sperrklinke, insbesondere formschlüssig, mit dem Parksperrenrad zusammenwirken, wodurch das Parksperrenrad und somit die Welle gegen eine relativ zu dem Getriebegehäuse erfolgende Drehung gesichert werden. Dadurch wird auch das Rad gegen eine Drehung gesichert, wodurch das Kraftfahrzeug gegen ein unerwünschtes Wegrollen gesichert werden kann. In der Freigabestellung wirkt die Sperrklinke beispielsweise nicht mit dem Parksperrenrad zusammen, sodass sich das Parksperrenrad und somit die Welle in der Freigabestellung relativ zu dem Getriebegehäuse drehen können. Somit kann sich auch das Rad relativ zu dem Aufbau drehen.

Die Parksperrenvorrichtung weist des Weiteren einen Betätigungskolben auf, welcher entlang einer Verschiebeachse relativ zu dem Parksperrenrad und relativ zu der Sperrklinke sowie vorzugsweise auch relativ zu dem Getriebegehäuse verschiebbar ist. Durch Verschieben des Betätigungskolbens ist eine Bewegung der Sperrklinke zwischen der Sperrstellung und der Freigabestellung bewirkbar. Hierunter kann insbesondere folgendes verstanden werden: Wird der Betätigungskolben beispielsweise in eine parallel zu der Verschiebeachse verlaufende oder mit der Verschiebeachse zusammenfallende erste Richtung relativ zu dem Parksperrenrad und relativ zu der Sperrklinke sowie relativ zu dem Getriebegehäuse verschoben, so kann dadurch beispielsweise eine Bewegung der Sperrklinke aus der Freigabestellung in die Sperrstellung bewirkt werden. Wird der Betätigungskolben beispielsweise in eine parallel zu der Verschiebeachse verlaufende oder mit der Verschiebeachse zusammenfallende und der ersten Richtung entgegengesetzte zweite Richtung relativ zu dem Parksperrenrad und relativ zu der Sperrklinke sowie auch relativ zu dem Getriebegehäuse verschoben, so kann dadurch beispielsweise eine Bewegung der Sperrklinke aus der Sperrstellung in die Freigabestellung bewirkt werden, insbesondere derart, dass der Betätigungskolben eine Bewegung der Sperrklinke aus der Sperrstellung in die Freigabestellung zulässt, das heißt einer solchen Bewegung der Sperrklinke nicht entgegen steht. Beispielsweise ist der Betätigungskolben mittels einer mechanischen Feder, insbesondere mittels einer mechanischen Druckfeder, in die erste Richtung verschiebbar. Alternativ oder zusätzlich kann der Betätigungskolben beispielsweise hydraulisch in die zweite Richtung verschoben werden, insbesondere entgegen der mechanischen Feder, das heißt entgegen einer durch die mechanische Feder bereitgestellten Federkraft.

Die Parksperrenvorrichtung weist außerdem einen Rasthebel auf, welcher um eine Schwenkachse relativ zu dem Betätigungskolben und vorzugsweise auch relativ zu dem Getriebegehäuse zwischen wenigstens einer den Betätigungskolben gegen eine entlang der Verschiebeachse erfolgende Bewegung sichernden Arretierstellung und wenigstens einer den Betätigungskolben für eine entlang der Verschiebeachse erfolgende Bewegung freigebenden Lösestellung verschwenkbar ist. Die Arretierstellung ist dabei eine erste Stellung des Rasthebels. Mit anderen Worten wird die Arretierstellung als erste Stellung bezeichnet. Die Lösestellung ist eine zweite Stellung des Rasthebels. Mit anderen Worten wird die Lösestellung auch als zweite Stellung bezeichnet. Beispielsweise verhindert der Rasthebel in der Arretierstellung insbesondere entgegen der zuvor genannten Federkraft eine insbesondere durch die Federkraft beziehungsweise durch die mechanische Feder bewirkbare Verschiebung des Betätigungskolbens in die erste Richtung. In der Lösestellung jedoch gibt der Rasthebel den Betätigungskolben frei, sodass beispielsweise in der Lösestellung des Rasthebels der Betätigungskolben mittels der mechanischen Feder, das heißt mittels der von der mechanischen Feder bereitgestellten Federkraft in die erste Richtung verschoben werden kann.

Die Parksperrenvorrichtung umfasst außerdem einen Hubmagneten, mittels welchem der Rasthebel aus einer der Stellungen in die andere Stellung verschwenkbar ist. Vorzugsweise ist die eine Stellung die Arretierstellung, sodass vorzugsweise die andere Stellung die Lösestellung ist. Selbstverständlich ist es jedoch denkbar, dass die eine Stellung die Lösestellung und die andere Stellung die Arretierstellung ist. Jedoch kann dann, wenn die eine Stellung die Arretierstellung und die andere Stellung die Lösestellung ist, eine besonders hohe Sicherheit realisiert werden, da beispielsweise dann des Rasthebel in der Arretierstellung verbleibt und insbesondere gehalten werden kann, ohne dass die Parksperrenvorrichtung von außerhalb, das heißt von einer bezüglich der Parksperrenvorrichtung externen, zusätzlich dazu vorgesehenen Vorrichtung mit Energie versorgt wird.

Um nun den Bauraumbedarf der Parksperrenvorrichtung in einem besonders geringen Rahmen halten zu können, ist es auf an sich bekannte Weise vorgesehen, dass die Schwenkachse senkrecht zu der Verschiebeachse verläuft. Hierunter ist insbesondere folgendes zu verstehen: die Schwenkachse verläuft senkrecht zu einer ersten Ebene, sodass die Schwenkachse eine erste Ebenennormale der ersten Ebene ist. Die Verschiebeachse verläuft senkrecht zu einer zweiten Ebene, sodass die Verschiebeachse eine zweite Ebenennormale der zweiten Ebene ist. Dabei ist unter dem Merkmal, dass sie Schwenkachse senkrecht zur Verschiebeachse verläuft, zu verstehen, dass die erste Ebene senkrecht zu der zweiten Ebene verläuft beziehungsweise umgekehrt. Der Erfindung liegt die Erkenntnis zugrunde, dass bei herkömmlichen Parksperrenvorrichtungen die Schwenkachse parallel zu der Verschiebeachse verläuft. Hierdurch muss der Hubmagnet seitlich und somit ungünstig angeordnet werden, woraus ein übermäßiger Bauraumbedarf resultiert. Außerdem kann dann der Rasthebel nur sehr reibungsintensiv, das heißt durch Überwendung einer sehr hohen Reibkraft aus der einen Stellung in die andere Stellung mittels des Hubmagnetes bewegt werden, sodass der Hubmagnet bauraum-, gewichts- und kostengünstig ausgestaltet werden muss.

Zum einen kann der Hubmagnet dadurch, dass die Schwenkachse senkrecht zu der Verschiebeachse verläuft beziehungsweise senkrecht zu der Verschiebeachse angeordnet ist, besonders bauraumgünstig angeordnet werden, sodass der Bauraumbedarf der Parksperrenvorrichtung insgesamt besonders gering gehalten werden kann. Andererseits muss mittels des Hubmagneten eine nur sehr geringe Reibkraft überwunden werden, um den Rasthebel aus der einen Stellung in die andere Stellung zu verschwenken. Dadurch kann der Hubmagnet selbst besonders bauraum-, kosten- und gewichtsgünstig ausgestaltet werden.

Um den Bauraumbedarf der Parksperrenvorrichtung und den Bauraumbedarf eines die Parksperrenvorrichtung umfassenden Fahrzeuggetriebes in einem besonders geringen Rahmen halten zu können, ist es erfindungsgemäß vorgesehen, dass der Hubmagnet ein Magnetelement aufweist, mittels welchem ein magnetisches Feld bereitstellbar oder bereitgestellt ist. Das Magnetelement kann ein Permanentmagnet sein, mittels welchem das Magnetfeld, insbesondere permanent, bereitgestellt ist beziehungsweise wird. Ferner ist es denkbar, dass das Magnetelement ein Elektromagnet ist, welcher beispielsweise wenigstens oder genau eine Spule aufweist. Durch Versorgen des Elektromagneten mit elektrischer Energie, insbesondere elektrischem Strom, kann der Elektromagnet das Magnetfeld bereitstellen. Unterbleibt ein Versorgen des Elektromagneten mit elektrischer Energie, so unterbleibt ein Bereitstellen des Magnetfelds durch das Magnetelement. Somit kann der Rasthebel besonders bedarfsgerecht aus der einen Stellung in die andere Stellung bewegt werden. Der Hubmagnet weist außerdem wenigsten ein Betätigungselement auf, welches mittels des Magnetfelds in eine Wirkrichtung relativ zu dem Magnetelement und relativ zu dem Rasthebel translatorisch bewegbar ist. Dies bedeutet beispielsweise, dass das Magnetfeld derart mit dem Betätigungselement, insbesondere mit einem Material, aus welchem das Betätigungselement gebildet ist, wechselwirken kann, dass beispielsweise aus dem Magnetfeld eine zumindest mittelbar, insbesondere direkt, auf das Betätigungselement wirkende und auch als Magnetfeld bezeichnete Betätigungskraft resultiert. Mittels der Betätigungskraft ist das Betätigungselement in die Wirkrichtung relativ zu dem Magnetelement und relativ zu dem Rasthebel translatorisch bewegbar, wodurch der Rasthebel aus der einen Stellung in die andere Stellung verschwenkbar ist. wieder mit anderen Worten ausgedrückt, wird das Betätigungselement mittels des Magnetfelds beziehungsweise mittels der Magnetkraft in die Wirkung translatorisch bewegt, so wird dadurch der Rasthebel aus der einen Stellung in die andere Stellung verschwenkt. Um dabei den Bauraumbedarf besonders gering zu halten, verläuft die Wirkrichtung parallel zu der Verschiebeachse, oder die Wirkrichtung fällt mit der Verschiebeachse zusammen.

Ferner ist es erfindungsgemäß vorgesehen, dass der Hubmagnet, der Rasthebel und der Betätigungskolben entlang der Verschiebeachse, das heißt entlang einer parallel zu der Verschiebeachse verlaufenden oder mit der Verschiebeachse zusammenfallenden Geraden in der folgenden Reihenfolge nacheinander, das heißt aufeinanderfolgenden, angeordnet sind: Hubmagnet, Rasthebel, Betätigungskolben. Dadurch kann der Bauraumbedarf des die Parksperrenvorrichtung umfassenden Fahrzeuggetriebes weiter verringert werden.

Die Parksperrenvorrichtung weist beispielsweise des Weiteren einen Betätigungskonus auf, welcher durch Verschieben des Betätigungskolbens entlang der Verschiebeachse relativ zu der Sperrklinke und relativ zu dem Parksperrenrad und auch relativ zu dem Getriebegehäuse verschiebbar ist. Dabei ist der Betätigungskolben beispielsweise mit dem Betätigungskonus gekoppelt beziehungsweise umgekehrt. Der Betätigungskonus ist insbesondere derart mit dem Betätigungskolben gekoppelt, dass durch in die erste Richtung erfolgendes Verschieben des Betätigungskolbens der Betätigungskonus in die erste Richtung relativ zu dem Parksperrenrad und relativ zu der Sperrklinke verschiebbar ist, wodurch über den Betätigungskonus beziehungsweise mittels des Betätigungskonus die Sperrklinke aus der Freigabestellung in die Sperrstellung bewegbar ist. Durch in die zweite Richtung erfolgendes Verschieben des Betätigungskolbens ist beispielsweise der Betätigungskonus in die zweite Richtung relativ zu der Sperrklinke und relativ zu dem Parksperrenrad verschiebbar, wodurch die Sperrklinke aus der Sperrstellung in die Freigabestellung bewegbar ist, das heißt wodurch der Betätigungskonus eine Bewegung der Sperrklinke aus der Sperrstellung in die Freigabestellung zulässt. Der Betätigungskonus weist beispielsweise eine außenumfangsseitige Mantelfläche auf, die konusförmig ist, das heißt kegelförmig oder kegelstumpfförmig ausgebildet ist und sich beispielsweise in die zweite Richtung erweitert beziehungsweise in die erste Richtung verjüngt. Wird beispielsweise der Betätigungskonus in die erste Richtung verschoben, so gleitet beispielsweise die konusförmige, außenumfangsseitige Mantelfläche an der Sperrklinke ab, wodurch die Sperrklinke aus der Freigabestellung in die Sperrstellung bewegt wird. Wird der Betätigungskonus daraufhin beispielsweise in die zweite Richtung verschoben, so kann in der Folge die Sperrklinke aus der Sperrstellung in die Freigabestellung bewegt werden.

Dabei ist es vorzugsweise vorgesehen, dass der Hubmagnet, der auch als Rastenhebel bezeichnete Rasthebel, der Betätigungskolben und der Betätigungskolben entlang der Verschiebeachse, welche beispielsweise mit einer axialen Richtung, insbesondere des Hubmagneten, zusammenfällt, in der folgenden Reihenfolge nacheinander angeordnet sind: Hubmagnet, Rasthebel, Betätigungskolben, Betätigungskonus. Dadurch kann der Bauraumbedarf besonders geringgehalten werden.

Eine weitere Ausführungsform zeichnet sich dadurch aus, dass die Sperrklinke um eine Sperrklinkenachse zwischen der Freigabestellung und der Sperrstellung relativ zu dem Parksperrenrad und vorzugsweise auch relativ zu dem Getriebegehäuse verschwenkbar und dadurch bewegbar ist. Um dabei den Bauraumbedarf der Parksperrenvorrichtung in einem besonders geringen Rahmen halten zu können, ist es vorzugsweise vorgesehen, dass die Sperrklinkenachse senkrecht zu der Verschiebeachse verläuft. Somit verläuft die Schwenkachse parallel zu der Schwenkachse und somit senkrecht zu der ersten Ebene.

Dabei hat es sich als besonders vorteilhaft gezeigt, wenn das Parksperrenrad und somit die Welle in der Freigabestellung um eine Drehachse relativ zu dem Betätigungskolben und somit relativ zu dem Getriebegehäuse drehbar und in der Sperrstellung gegen eine um die Drehachse erfolgende Drehung mittels der Sperrklinke gesichert sind. Um dabei den Bauraumbedarf besonders gering halten zu können, ist es vorzugsweise vorgesehen, dass die Drehachse parallel zu der Sperrklinkenachse und somit parallel zu der Schwenkachse und somit senkrecht zu der ersten Ebene verläuft.

Bei einer weiteren, besonders vorteilhaften Ausführungsform der Erfindung umfasst die Parksperrenvorrichtung eine koaxial zu dem Betätigungskolben angeordnete und mit dem Betätigungskolben entlang der Verschieberichtung relativ zu der Sperrklinke und relativ zu dem Parksperrenrad und relativ zu dem Getriebegehäuse mit verschiebbare Kolbenstange. Die Kolbenstange weist, insbesondere an ihrem dem Rasthebel zugewandten Ende, eine auch als Eingriffskontur bezeichnete Ausnehmung auf, in welcher der Rasthebel in der Arretierstellung zumindest teilweise aufnehmbar oder aufgenommen ist. Hierdurch ist der Betätigungskolben gegen eine entlang der Verschiebeachse erfolgende Bewegung zu sichern. Mit anderen Worten kann der Rasthebel in der Arretierstellung in die korrespondierende Eingriffskontur eingreifen, wodurch der Rasthebel in der Arretierstellung formschlüssig mit dem Betätigungskolben zusammenwirken kann. Hierdurch kann der Betätigungskolben auf besonders bauraumgünstige und sichere Weise gegen eine unerwünschte Verschiebung, insbesondere in die erste Richtung, gesichert werden.

Dabei hat es sich als besonders vorteilhaft gezeigt, wenn der Betätigungskolben separat von der Kolbenstange ausgebildet, auf der Kolbenstange angeordnet und zumindest entlang der Verschiebeachse an der Kolbenstange festgelegt ist.

Um dabei den Bauraumbedarf besonders gering halten zu können, ist es in weiterer Ausgestaltung der Erfindung vorgesehen, dass der Betätigungskolben auf die Kolbenstange aufgepresst und dadurch zumindest entlang der Verschiebeachse an der Kolbenstange festgelegt ist.

Um auf besonders bauraumgünstige Weise eine besonders hohe Sicherheit der Parksperrenvorrichtung realisieren zu können, ist es in weiterer Ausgestaltung der Erfindung vorgesehen, dass die Parksperrenvorrichtung ein zusätzlich zu dem Hubmagneten vorgesehenes Bewegungselement aufweist, welches hydraulisch in eine parallel zu der Verschiebeachse verlaufende Bewegungsrichtung relativ zu dem Rasthebel translatorisch bewegbar ist, wodurch der Rasthebel aus der einen Stellung in die andere Stellung verschwenkbar ist.

Ein zweiter Aspekt der Erfindung betrifft ein Fahrzeuggetriebe, welches eine Parksperrenvorrichtung gemäß dem ersten Aspekt der Erfindung aufweist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

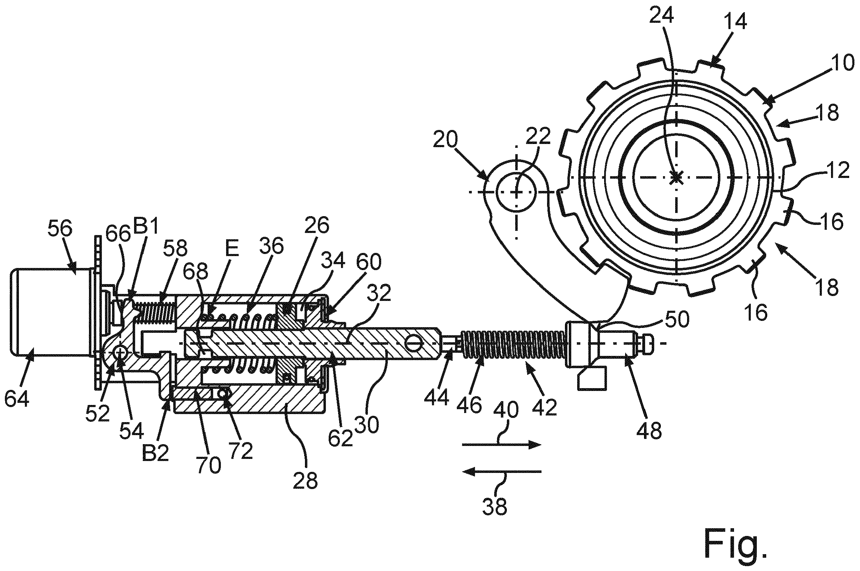

Weitere Vorteile, Merkmale und Einzelheiten der Erfindung ergeben sich aus der nachfolgenden Beschreibung eines bevorzugten Ausführungsbeispiels sowie anhand der Zeichnung.

Die einzige Figur der Zeichnung zeigt in einer schematischen und teilweise geschnittenen Ansicht eine einfach auch als Parksperre bezeichnete Parksperrenvorrichtung 10 für ein nicht dargestelltes Kraftfahrzeug, insbesondere für ein nicht weiter dargestelltes Fahrzeuggetriebe eines Kraftfahrzeugs. Das Kraftfahrzeug weist einen Antriebsmotor, ein Fahrzeuggetriebe und wenigstens zwei auch als Fahrzeugräder bezeichnete Räder auf, die über das Fahrzeuggetriebe von dem Antriebsmotor angetrieben werden können. Hierdurch wird das Kraftfahrzeug insgesamt angetrieben. Dabei ist die Parksperrenvorrichtung 10 Bestandteil des Fahrzeuggetriebes. Das Fahrzeuggetriebe weist ein Getriebegehäuse und eine Welle, zum Beispiel eine Ausgangswelle des Fahrzeuggetriebes, auf, welche permanent drehmomentübertragend mit den Rädern gekoppelt ist.

Die Parksperrenvorrichtung 10 weist dabei ein koaxial zu der Welle angeordnetes und auf der Welle angeordnetes Parksperrenrad 12 auf, welches, insbesondere permanent, drehfest mit der Welle verbunden sein kann. Das Parksperrenrad 12 weist eine Verzahnung 14 auf, die in Umfangsrichtung des Parksperrenrads 12 aufeinanderfolgend angeordnete und voneinander beabstandete Zähne 16 aufweist. Zwischen jeweils zwei in Umfangsrichtung des Parksperrenrads 12 direkt beziehungsweise unmittelbar aufeinanderfolgenden Zähnen 16 ist eine jeweilige Zahnlücke 18 der Verzahnung 14 angeordnet.

Die Parksperrenvorrichtung 10 weist außerdem eine Sperrklinke 20 auf, welche relativ zu dem Parksperrenrad 12 und relativ zu dem Getriebegehäuse um eine Sperrklinkenachse 22 zwischen wenigstens einer in der Fig. gezeigten Sperrstellung und wenigstens einer Freigabestellung verschwenkbar ist. In der Sperrstellung greift die Sperrklinke 20 in eine der Zahnlücken 18 und somit in die Verzahnung 14 ein, wodurch die Sperrklinke 20 formschlüssig mit dem Parksperrenrad 12 und über dieses mit der Welle zusammenwirkt. Dadurch sind in der Sperrstellung das Parksperrenrad 12 und somit die Welle mittels der Sperrklinke 20 gegen eine um die Drehachse 24 und relativ zu dem Getriebegehäuse erfolgende Drehung gesichert. Mit anderen Worten können sich in der Sperrstellung das Parksperrenrad 12 und somit die Welle nicht um die Drehachse 24 relativ zu dem Getriebegehäuse drehen. In der Freigabestellung jedoch befindet sich die Sperrklinke 20 außer Eingriff mit dem Parksperrenrad 12, sodass die Sperrklinke 20 in der Freigabestellung nicht in die Verzahnung 14 eingreift. Dadurch gibt die Sperrklinke 20 in der Freigabestellung das Parksperrenrad 12 und somit die Welle für eine um die Drehachse 24 relativ zu dem Getriebegehäuse erfolgende Drehung frei.

Die Parksperrenvorrichtung 10 umfasst außerdem einen Betätigungskolben 26, welcher in einem Gehäuse 28 der Parksperrenvorrichtung 10 translatorisch bewegbar aufgenommen ist. Des Weiteren umfasst die Parksperrenvorrichtung 10 eine Kolbenstange 30, wobei der Betätigungskolben 26 separat von der Kolbenstange 30 ausgebildet, und, insbesondere fest, mit der Kolbenstange 30 verbunden ist. Dadurch sind der Betätigungskolben 26 und mit diesem die Kolbenstange 30 entlang einer Verschiebeachse 32 relativ zu dem Parksperrenrad 12, relativ zu der Sperrklinke 20, relativ zu dem Gehäuse 28 und relativ zu dem Getriebegehäuse verschiebbar, wodurch eine Bewegung der Sperrklinke 20 zwischen der Sperrstellung und der Freigabestellung bewirkbar ist. Der Betätigungskolben 26 und das Gehäuse 28 begrenzen jeweils teilweise eine Arbeitskammer 34, in welche ein Fluid, insbesondere eine Hydraulikflüssigkeit, einleitbar ist. Außerdem umfasst die Parksperrenvorrichtung 10 eine als mechanische Druckfeder fungierende, mechanische Feder 36, welche entlang der Verschiebeachse einerseits zumindest mittelbar, insbesondere direkt, an dem Betätigungskolben 26 und andererseits zumindest mittelbar, insbesondere direkt, an dem Gehäuse 28 abgestützt oder abstützbar ist. Wird die Hydraulikflüssigkeit in die Arbeitskammer 34 eingeleitet, so werden dadurch der Betätigungskolben 26, welcher einfach auch als Kolben bezeichnet wird, und mit dem Kolben die Kolbenstange 30 in eine in der Fig. durch einen Pfeil 38 veranschaulichte und parallel zu der Verschiebeachse 32 verlaufende oder mit der Verschiebeachse 32 zusammenfallende erste Richtung relativ zu dem Gehäuse 28 verschoben. Hierdurch wird die Feder 36 komprimiert, wodurch die Feder 35 eine Federkraft bereitstellt. Die Federkraft wirkt in eine in der Fig. durch einen Pfeil 40 veranschaulichte zweite Richtung, welche der ersten Richtung entgegengesetzt ist und parallel zur Verschiebeachse 32 verläuft beziehungsweise mit der Verschiebeachse 32 zusammenfällt. Wird die Hydraulikflüssigkeit aus der Arbeitskammer 34 abgelassen beziehungsweise wird zugelassen, dass die Hydraulikflüssigkeit aus der Arbeitskammer 34 herausströmen kann, so kann sich die Feder 36 zumindest teilweise entspannen. In der Folge werden der Kolben und mit diesem die Kolbenstange 30 mittels der Feder 36, das heißt mittels der von der Feder 36 bereitgestellten Federkraft entlang der Verschiebeachse 32 in die zweite Richtung relativ zu dem Gehäuse 28 verschoben.

Die Parksperrenvorrichtung 10 umfasst außerdem ein Schaltgestänge 42, welches eine Schaltstange 44, eine weitere, mechanische Feder 46 und einen auch als Konus oder Sperrkonus bezeichneten Betätigungskonus 48 aufweist. Die Schaltstange 44 ist beispielsweise separat von der Kolbenstange 30 ausgebildet, und, insbesondere gelenkig, mit der Kolbenstange 30 gekoppelt, insbesondere derart, dass die Schaltstange 44 entlang der Verschiebeachse mit der Kolbenstange 30 mit verschiebbar ist. Wird somit beispielsweise die Kolbenstange 30 in die erste Richtung relativ zu dem Gehäuse 28 verschoben, so wird dadurch die Schaltstange 44 in die erste Richtung relativ zu dem Gehäuse 28 mit der Kolbenstange 30 mitverschoben. Wird die Kolbenstange 30 in die zweite Richtung verschoben, so wird dadurch die Schaltstange 44 in die zweite Richtung relativ zu dem Gehäuse 28 mit der Kolbenstange 30 mit verschoben. Der Betätigungskonus 48 ist beispielsweise in axialer Richtung der Schaltstange 44 relativ zu der Schaltstange 44 verschiebbar. Insbesondere kann der Betätigungskonus 48 in axialer Richtung der Schaltstange 44 relativ zur Schaltstange 44 verschiebbar auf der Schaltstange 44 angeordnet sein. Dadurch wird beispielsweise der Betätigungskonus 48 mittels der Schaltstange 44 geführt, wenn der Betätigungskonus 48 relativ zur Schaltstange 44 verschoben wird. Der Betätigungskonus 48 ist in axialer Richtung der Schaltstange 44 über die auch als Sperrkonusfeder bezeichnete Feder 46 an der Schaltstange 44 abstützbar oder abgestützt. Mit anderen Worten ist die Feder 46 in axialer Richtung der Schaltstange 44 einerseits zumindest mittelbar, insbesondere direkt, an dem Betätigungskonus 48 und andererseits zumindest mittelbar, insbesondere direkt, an der Schaltstange 44 abstützbar oder abgestützt. In wenigstens einer Stellung der Schaltstange 44 relativ zu der Kolbenstange 30 fällt beispielsweise die axiale Richtung der Schaltstange 44 mit der Verschiebeachse 32 zusammen. Dies ist in der Fig. gezeigt. Wird beispielsweise der Betätigungskonus 48 in die erste Richtung relativ zu der Schaltstange 44 verschoben, so wird dadurch die Feder 46 komprimiert, sodass die Feder 46 eine Federkraft bereitstellt. Mittels der Federkraft kann der Betätigungskonus 48 in die zweite Richtung relativ zur Schaltstange 44 verschoben werden.

Die einzige Fig. zeigt die Parksperrenvorrichtung 10 in einem eingelegten beziehungsweise aktivierten Zustand der Parksperrenvorrichtung 10. In dem eingelegten beziehungsweise aktivierten Zustand befindet sich die Sperrklinke 20 in ihrer Sperrstellung. Um die Parksperrenvorrichtung 10 auszulegen beziehungsweise zu deaktivieren, das heißt um die Parksperrenvorrichtung 10 aus ihrem eingelegten Zustand in ihren ausgelegten beziehungsweise deaktivierten Zustand zu bringen, in welchem die Sperrklinke 20 das Parksperrenrad 12 für eine um die Drehachse 24 und relativ zu dem Getriebegehäuse erfolgende Drehung freigibt, werden der Kolben und somit die Kolbenstange 30 und die Schaltstange 44 und über diese der Betätigungskonus 48 in die erste Richtung relativ zu dem Gehäuse 28 verschoben. Hierdurch wird eine Bewegung der Sperrklinke 20 aus der Sperrstellung in die Freigabestellung bewirkt beziehungsweise zugelassen. Insgesamt ist erkennbar, dass das Schaltgestänge 42 mit der Kolbenstange 30 entlang der Verschiebeachse 32 relativ zu dem Gehäuse 28 mit verschiebbar ist.

Um die Parksperrenvorrichtung 10 einzulegen beziehungsweise zu aktivieren, wird zugelassen, dass Hydraulikflüssigkeit aus der Arbeitskammer 34 ausströmen kann. In der Folge werden der Kolben und somit die Kolbenstange 30 und die Schaltstange 44 mittels der Feder 36 relativ zu dem Gehäuse 28 in die zweite Richtung verschoben. Befindet sich dabei das Parksperrenrad in einer solchen Drehstellung, dass die Sperrklinke 20 in eine der Zahnlücken 18 eingreifen kann, so gleitet der Betätigungskonus 48, insbesondere eine konusförmige, außenumfangsseitige Mantelfläche 50 des Betätigungskonus 48, an der Sperrklinke 20 ab, sodass die Sperrklinke 20 mittels der Mantelfläche 50 aus der Freigabestellung in die Sperrstellung bewegt wird.

Kommt es jedoch zu einer so genannten Zahn-auf-Zahn-Stellung, bei der die Sperrklinke 20 nicht in Eingriff mit einer der Zahnlücken 18 bewegt werden kann, sondern in Stützanlage mit einem der Zähne 16 kommt, wodurch zunächst eine Bewegung der Sperrklinke 20 aus der Freigabestellung in die Sperrstellung verhindert wird, so wird trotz dessen, dass der Kolben, die Kolbenstange 30 und die Schaltstange 44 in die erste Richtung relativ zu dem Gehäuse 28 bewegt werden, eine Bewegung des Betätigungskonus 48 in die erste Richtung zunächst vermieden, wodurch die Feder 46 gespannt, insbesondere komprimiert, wird. Dadurch übt die Feder 46 eine Federkraft auf den Betätigungskonus 48 aus. Rollt dann beispielsweise das Kraftfahrzeug noch ein Stück, sodass die Welle und somit das Parksperrenrad 12 derart um die Drehachse 24 relativ zu dem Getriebegehäuse gedreht werden, dass die Zahn-auf-Zahn-Stellung aufgehoben wird und demzufolge die Sperrklinke 20 in eine der Zahnlücken 18 hinein bewegt werden kann, so entspannt sich die Feder 46, sodass der Betätigungskonus 48 mittels der Feder 46 in die erste Richtung relativ zu dem Gehäuse 28 bewegt wird. Hierbei gleitet die Mantelfläche 50 an der Sperrklinke 20 ab, wodurch die Sperrklinke 20 in eine der Zahnlücken 18 hineinbewegt, mithin in die Sperrstellung bewegt wird.

Die Parksperrenvorrichtung 10 weist außerdem einen auch als Rastenhebel bezeichneten Rasthebel 52 auf, welcher um eine Schwenkachse 54 relativ zu dem Gehäuse 28 und relativ zu dem Getriebegehäuse zwischen wenigstens einer in der Fig. gezeigten Arretierstellung und wenigstens einer Lösestellung verschwenkbar ist. In der Arretierstellung werden bei ausgelegter Parksperrenvorrichtung 10 die Kolbenstange 30 und somit der Betätigungskolben 26 mittels des Rasthebels 52 gegen eine relativ zu dem Gehäuse 28 in die zweite Richtung erfolgende Verschiebung, entgegen der von der Feder 36 bereitgestellten Federkraft, insbesondere formschlüssig, gesichert, wodurch ein unerwünschtes, durch die von der Feder 36 bereitgestellte Federkraft bewirktes Einlegen der Parksperrenvorrichtung 10 vermieden wird. In der Lösestellung jedoch gibt der Rasthebel 52 die Kolbenstange 30 und den Betätigungskolben 26 für eine in die zweite Richtung relativ zu dem Gehäuse 28 erfolgende und beispielsweise mittels der von der Feder 36 bereitgestellten Federkraft bewirkte oder bewirkbare Verschiebung frei, sodass in der Lösestellung die Feder 36 die Kolbenstange 30 und über diese den Betätigungskolben 26 in die zweite Richtung relativ zu dem Gehäuse 28 verschieben und in der Folge eine Bewegung der Sperrklinke 20 aus der Freigabestellung in die Sperrstellung bewirken kann.

Darüber hinaus umfasst die Parksperrenvorrichtung 10 einen als Hubmagnet 56 ausgebildeten Aktor, mittels welchem unter Nutzung von elektrischer Energie beziehungsweise elektrischem Strom der Rasthebel 52 um die Schwenkachse 54 aus der Arretierstellung in die Lösestellung relativ zu dem Gehäuse 28 verschwenkbar ist. Bezogen auf die Bildebene der einzigen Fig. kann der Hubmagnet 56 den Rasthebel 52 im Uhrzeigersinn relativ zu dem Gehäuse 28 verschwenken und dadurch aus der Arretierstellung in die Lösestellung verschwenken. Hierzu kann der Hubmagnet 56 mit einem ersten Bereich B1 des Rasthebels 52 zumindest mittelbar, insbesondere direkt, zusammenwirken. Dies bedeutet, dass der Hubmagnet 56, insbesondere ein Betätigungselement des Hubmagneten 56, eine Kraft auf den Bereich B1 des Rasthebels 52 ausüben kann. Diese Kraft führt zu einem um die Schwenkachse 54 wirkenden Drehmoment, welches bezogen auf die Bildebene der Fig. im Uhrzeigersinn wirkt. Hierdurch wird der Rasthebel 52 aus der Arretierstellung in die Lösestellung verschwenkt. Es ist erkennbar, dass der Rasthebel 52 um die Schwenkachse 54 in eine erste Schwenk- oder Drehrichtung verschwenkbar und dadurch aus der Arretierstellung in die Lösestellung verschwenkbar ist. Dabei ist der Rasthebel 52 eine weitere mechanische Feder 58 zugeordnet, welche auch als Rückstellfeder bezeichnet wird. Wird der Rasthebel 52 in die erste Drehrichtung und somit aus der Arretierstellung in die Lösestellung verschwenkt, so wird die Feder 58 gespannt, insbesondere komprimiert. In der Folge stellt die Feder 58 eine Federkraft bereit, die auf den Rasthebel 52 derart wirkt, dass aus der von der Feder 58 bereitgestellten und auf den Rasthebel 52 wirkenden Federkraft ein zweites Drehmoment wirkt, welches um die Schwenkachse 54 in eine der ersten Drehrichtung entgegengesetzte zweite Drehrichtung wirkt. Somit kann der Rasthebel 52, insbesondere nach dem er in die erste Drehrichtung verschwenkt wurde, mittels des zweiten Drehmoments in die zweite Drehrichtung und somit aus der Lösestellung zurück in die Arretierstellung verschwenkt und insbesondere in der Arretierstellung gehalten werden. Dabei ist die Feder 58 einerseits zumindest mittelbar, insbesondere direkt, an dem Rasthebel 52 und andererseits zumindest mittelbar, insbesondere direkt, an dem Gehäuse 28 abstützbar oder abgestützt.

Um nun den Bauraumbedarf der Parksperrenvorrichtung 10 in einem besonders geringen Rahmen halten zu können, verläuft die Schwenkachse 54 senkrecht zur Verschiebeachse 32. Mit anderen Worten ist die Schwenkachse 54 senkrecht zur Verschiebeachse 32 angeordnet.

Die Parksperrenvorrichtung 10 umfasst auch ein separat von dem Gehäuse 28 ausgebildetes und mit dem Gehäuse 28 verbundenes Deckelelement 60, durch welches die Arbeitskammer 34 teilweise begrenzt ist. Das Deckelelement 60 weist eine Durchgangsöffnung 62 auf, welche von der Kolbenstange 30 durchdrungen ist. Somit ist das Deckelelement 60 eine Kolbenstangenführung, mittels welcher die Kolbenstange 30 bei ihren relativ zu dem Gehäuse 28 und relativ zu dem Deckelelement 60 und entlang der Verschiebeachse 32 erfolgenden Verschiebungen geführt wird beziehungsweise zu führen ist.

Der Hubmagnet 56 weist wenigstens ein in der Fig. besonders schematisch dargestelltes Magnetelement 64 auf, welches beispielsweise als Elektromagnet ausgebildet ist. Mittels des Magnetelements 64 ist ein magnetisches Feld bereitstellbar oder bereitgestellt. Außerdem umfasst der Hubmagnet 56 ein Betätigungselement 66, welches mittels des Magnetfelds in eine durch den Pfeil veranschaulichte und somit mit der zweiten Richtung zusammenfallende Wirkrichtung relativ zu dem Magnetelement 64, relativ zu dem Rasthebel 52 und relativ zu dem Gehäuse 28 translatorisch bewegbar, das heißt vershiebbar ist. Wird das Betätigungselement 66 mittels des Magnetelementen 64 in die Wirkrichtung und somit in die zweite Richtung verschoben, wirkt das Betätigungselement 66 die zuvor genannte Kraft auf den Bereich B1 aus, wodurch der Rasthebel 52 in die erste Drehrichtung relativ zu dem Gehäuse 28 verschwenkt wird. Somit wird der Rasthebel 52 aus der Arretierstellung in die Lösestellung verschwenkt. Dabei verläuft die Wirkrichtung parallel zu der Verschiebeachse 32 beziehungsweise die Wirkrichtung fällt mi der Verschiebeachse 32 zusammen. Außerdem sind die Hubmagnet 56, der Rasthebel 52, die Kolbenstange 30 und das Schaltgestänge 42 entlang der Verschiebeachse 32 in der folgenden Reihenfolge nacheinander angeordnet: Hubmagnet 56, Rasthebel 52, Betätigungskolben 26, Schaltgestänge 42. Des Weiteren verläuft auch die Sperrklinkenachse 22 senkrecht zur Verschiebeachse 32. Die Drehachse 24 verläuft parallel zur Sperrklinkenachse 22 und somit ebenfalls senkrecht zur Verschiebeachse 32.

Um den Betätigungskolben 26 und die Kolbenstange 30 besonders sicher gegen eine in die zweite Richtung und relativ zu dem Gehäuse 28 erfolgende Verschiebung entlang der Verschiebeachse 32 zu sichern, weist die Kolbenstange 30, insbesondere an ihrem dem Rasthebel 52 zugewandten Ende E, eine auch als Eingriffskontur bezeichnete Ausnehmung 68 auf, welche sich beispielsweise in Umfangsrichtung der Kolbenstange 30 vollständig umlaufend um die Kolbenstange 30 herum erstreckt. Ist die Parksperrenvorrichtung 10 ausgelegt, und befindet sich der Rasthebel 52 in seiner Arretierstellung, so greift der Rasthebel 52 in die Ausnehmung 68 ein, wodurch die Kolbenstange 30 und somit der Betätigungskolben 26 formschlüssig gegen eine Verschiebung entlang der Verschiebeachse 32 gesichert sind.

Des Weiteren weist die Parksperrenvorrichtung 10 ein zusätzlich zu dem Hubmagneten 56 vorgesehenes und bezüglich des Hubmagneten 56 externes Bewegungselement in Form eines Kolbens 70 auf, welcher eine weitere, zusätzlich zu der Arbeitskammer 34 vorgesehene Arbeitskammer 72 teilweise begrenzt. Die Arbeitskammer 72 ist auch teilweise durch das Gehäuse 28 begrenzt. In die Arbeitskammer 72 kann ein beziehungsweise die Hydraulikflüssigkeit eingeleitet werden. Hierdurch wird der Kolben 70 relativ zu dem Gehäuse 28 in die erste Richtung verschoben. Dadurch übt der Kolben 70 eine zweite Kraft auf einen zweiten Bereich B2 des Rasthebels 52 aus. Diese zweite Kraft führt zu einem weiteren Drehmoment, welches um die Schwenkachse 54 in die erste Drehrichtung wirkt. Somit kann der Rasthebel 52 auch mittels des Kolbens 70 aus der Arretierstellung in die Lösestellung verschwenkt werden. Dabei ist der Bereich B1 jenseits der Schwenkachse 54 angeordnet, während der Bereich B2 diesseits der Schwenkachse 54 angeordnet ist, insbesondere bezogen auf eine senkrecht zur Schwenkachse 54 und senkrecht zur Verschiebeachse 32 verlaufende Richtung.

Die beschriebene Anordnung des Hubmagneten 56, des Rasthebels 52, der Kolbenstange 30 und der Schaltstange 44 in Reihe ermöglicht eine besonders schlanke und somit bauraum- und gewichtsgünstige Gestaltung des Hubmagneten 56. Reaktionskräfte am Rasthebel 52, wobei die Reaktionskräfte beispielsweise daraus resultieren, dass die Feder 58 mittels einer Federkraft den Rasthebel 52 in der Arretierstellung hält, stützten sich nur an der Schwenkachse 54 ab, wodurch der Rasthebel 52 besonders reibungsarm aus der Arretierstellung in die Lösestellung verschwenkt, mithin entriegelt werden kann. Somit muss der Hubmagnet 56 eine nur geringe Betätigungskraft auf den Rasthebel 52 ausüben, um den Rasthebel 52 zu entriegeln, wodurch der Hubmagnet 56 besonders bauraumgünstig dimensioniert werden kann. Somit können der Bauraumbedarf und das Gewicht der Parksperrenvorrichtung 10 in einem besonders geringen Rahmen gehalten werden.

### Bezugszeichenliste

- 10: Parksperrenvorrichtung
- 12: Parksperrenrad
- 14: Verzahnung
- 16: Zahn
- 18: Zahnlücke
- 20: Sperrklinke
- 22: Sperrklinkenachse
- 24: Drehachse
- 26: Betätigungskolben
- 28: Gehäuse
- 30: Kolbenstange
- 32: Verschiebeachse
- 34: Arbeitskammer
- 36: Feder
- 38: Pfeil
- 40: Pfeil
- 42: Schaltgestänge
- 44: Schaltstange
- 46: Feder
- 48: Betätigungskonus
- 50: außenumfangsseitige Mantelfläche
- 52: Rasthebel
- 54: Schwenkachse
- 56: Hubmagnet
- 58: Feder
- 60: Deckelelement
- 62: Durchgangsöffnung
- 64: Magnetelement
- 66: Betätigungselement
- 68: Ausnehmung
- 70: Kolben
- 72: Arbeitskammer
- B1, B2: Bereich
- E: Ende

## Patentansprüche

1. Parksperrenvorrichtung (10) für ein Fahrzeuggetriebe, mit einem drehfest mit einer Welle des Fahrzeuggetriebes verbindbaren Parksperrenrad (12), mit einer Sperrklinke (20), welche relativ zu dem Parksperrenrad (12) zwischen wenigstens einer das Parksperrenrad (12) gegen eine Drehung sichernden Sperrstellung und wenigstes einer das Parksperrenrad (12) für eine Drehung freigebenden Freigabestellung bewegbar ist, mit einem Betätigungskolben (26), welcher entlang einer Verschiebeachse (32) relativ zu dem Parksperrenrad (12) und relativ zu der Sperrklinke (20) verschiebbar ist, wodurch eine Bewegung der Sperrklinke (20) zwischen der Sperrstellung und der Freigabestellung bewirkbar ist, mit einem Rasthebel (52), welcher um eine Schwenkachse (54) relativ zu dem Betätigungskolben (26) zwischen wenigstens einer den Betätigungskolben (26) gegen eine entlang der Verschiebeachse (32) erfolgende Bewegung sichernden Arretierstellung als erster Stellung und wenigstens einer den Betätigungskolben (26) für eine entlang der Verschiebeachse (32) erfolgende Bewegung freigebenden Lösestellung als zweiter Stellung verschwenkbar ist, und mit einem Hubmagneten (56), mittels welchem der Rasthebel (52) aus einer der Stellungen in die andere Stellung verschwenkbar ist,
wobei die Schwenkachse (54) senkrecht zu der Verschiebeachse (32) verläuft,
wobei der Hubmagnet (56) wenigstens ein Magnetelement (64), mittels welchem ein magnetisches Feld bereitstellbar oder bereitgestellt ist, und wenigsten ein Betätigungselement (66) aufweist, welches mittels des Magnetfelds in eine Wirkrichtung (40) relativ zu dem Magnetelement (64) und relativ zu dem Rasthebel (52) translatorisch bewegbar ist, wodurch der Rasthebel (52) aus der einen Stellung in die andere Stellung verschwenkbar ist, wobei die Wirkrichtung (40) parallel zu der Verschiebeachse (32) verläuft oder mit der Verschiebeachse (32) zusammenfällt,
**dadurch gekennzeichnet, dass**
der Hubmagnet (56), der Rasthebel (52) und der Betätigungskolben (26) entlang der Verschiebeachse (32) in der folgenden Reihenfolge nacheinander angeordnet sind: Hubmagnet (56), Rasthebel (52), Betätigungskolben (26).

2. Parksperrenvorrichtung (10) nach Anspruch 1,
**dadurch gekennzeichnet, dass**
die Sperrklinke (20) um eine Sperrklinkenachse (22) zwischen der Freigabestellung und der Sperrstellung verschwenkbar und dadurch bewegbar ist, wobei die Sperrklinkenachse (22) senkrecht zu der Verschiebeachse (32) verläuft.

3. Parksperrenvorrichtung (10) nach Anspruch 2,
**dadurch gekennzeichnet, dass**
das Parksperrenrad (12) in der Freigabestellung um eine Drehachse (24) drehbar und in der Sperrstellung gegen eine um die Drehachse (24) erfolgende Drehung mittels der Sperrklinke (20) gesichert ist, wobei die Drehachse (24) parallel zu der Sperrklinkenachse (22) verläuft.

4. Parksperrenvorrichtung (10) nach einem der vorhergehenden Ansprüche,
**gekennzeichnet durch**
eine koaxial zu dem Betätigungskolben (26) angeordnete und mit dem Betätigungskolben (26) entlang der Verschiebeachse (32) mitverschiebbare Kolbenstange (30), welche wenigstens eine Ausnehmung (68) aufweist, in welcher der Rasthebel (52) in der Arretierstellung zumindest teilweise aufnehmbar ist, wodurch der Betätigungskolben (26) gegen eine entlang der Verschiebeachse (32) erfolgende Bewegung zu sichern ist.

5. Parksperrenvorrichtung (10) nach Anspruch 4,
**dadurch gekennzeichnet, dass**
der Betätigungskolben (26) separat von der Kolbenstange (30) ausgebildet, auf der Kolbenstange (30) angeordnet und zumindest entlang der Verschiebeachse (32) an der Kolbenstange (30) festgelegt ist.

6. Parksperrenvorrichtung (10) nach Anspruch 5,
**dadurch gekennzeichnet, dass**
der Betätigungskolben (26) auf die Kolbenstange (30) aufgepresst und dadurch zumindest entlang der Verschiebeachse (32) an der Kolbenstange (30) festgelegt ist.

7. Parksperrenvorrichtung (10) nach einem der vorhergehenden Ansprüche,
**gekennzeichnet durch**
ein zusätzlich zu dem Hubmagneten (56) vorgesehenes Bewegungselement (70), welches hydraulisch in eine parallel zu der Verschiebeachse (32) verlaufende Bewegungsrichtung (38) relativ zu dem Rasthebel (52) translatorisch bewegbar ist, wodurch der Rasthebel (52) aus der ersten Stellung in die zweite Stellung oder aus der zweiten Stellung in die erste Stellung verschwenkbar ist

8. Fahrzeuggetriebe, mit einer Parksperrenvorrichtung (10) nach einem der vorhergehenden Ansprüche.

## Claims

1. Parking lock device (10) for a vehicle transmission, comprising a parking lock wheel (12) that can be connected for conjoint rotation to a shaft of the vehicle transmission, comprising a pawl (20), which can be moved relative to the parking lock wheel (12) between at least one locked position, which secures the parking lock wheel (12) against rotation, and at least one release position, which releases the parking lock wheel (12) for rotation, comprising an actuating piston (26), which can be displaced, along a displacement axis (32), relative to the parking lock wheel (12) and relative to the pawl (20), as a result of which a movement of the pawl (20) can be effected between the locked position and the release position, comprising a locking lever (52), which can be pivoted about a pivot axis (54), relative to the actuating piston (26), between at least one locking position, which secures the actuating piston (26) against a movement taking place along the displacement axis (32), as the first position and at least one release position, which releases the actuating piston (26) for a movement taking place along the displacement axis (32), as the second position, and comprising a linear solenoid (56), by means of which the locking lever (52) can be pivoted from one of the positions into the other position,
the pivot axis (54) extending perpendicularly to the displacement axis (32),
the linear solenoid (56) having at least one magnetic element (64), by means of which a magnetic field can be provided or is provided, and at least one actuating element (66), which can be moved translationally in an active direction (40) relative to the magnetic element (64) and relative to the locking lever (52) by means of the magnetic field, as a result of which the locking lever (52) can be pivoted from one position into the other position, the active direction (40) extending in parallel with the displacement axis (32) or coinciding with the displacement axis (32),
**characterized in that**
the linear solenoid (56), the locking lever (52) and the actuating piston (26) are arranged successively along the displacement axis (32) in the following order: linear solenoid (56), locking lever (52), actuating piston (26).

2. Parking lock device (10) according to claim 1,
**characterized in that**
the pawl (20) can be pivoted about a pawl axis (22) between the release position and the locked position and is thus movable, the pawl axis (22) extending perpendicularly to the displacement axis (32).

3. Parking lock device (10) according to claim 2,
**characterized in that**
in the release position the parking lock wheel (12) is rotatable about an axis of rotation (24) and in the locked position is secured by means of the pawl (20) against a rotation taking place about the axis of rotation (24), the axis of rotation (24) extending in parallel with the pawl axis (22).

4. Parking lock device (10) according to any of the preceding claims,
**characterized by**
a piston rod (30), which is arranged coaxially with the actuating piston (26) and is displaceable together with the actuating piston (26) along the displacement axis (32), which piston rod has at least one recess (68) in which the locking lever (52) can be at least partially received in the locking position, as a result of which the actuating piston (26) is secured against a movement taking place along the displacement axis (32).

5. Parking lock device (10) according to claim 4,
**characterized in that**
the actuating piston (26) is formed separately from the piston rod (30), is arranged on the piston rod (30), and is fixed on the piston rod (30) at least along the displacement axis (32).

6. Parking lock device (10) according to claim 5,
**characterized in that**
the actuating piston (26) is pressed onto the piston rod (30) and as a result is fixed on the piston rod (30) at least along the displacement axis (32).

7. Parking lock device (10) according to any of the preceding claims,
**characterized by**
a movement element (70), which is provided in addition to the linear solenoid (56) and is hydraulically translationally movable relative to the locking lever (52) in a movement direction (38) extending in parallel with the displacement axis (32), as a result of which the locking lever (52) can be pivoted from the first position into the second position or from the second position into the first position.

8. Vehicle transmission comprising a parking lock device (10) according to any of the preceding claims.

## Revendications

1. Dispositif de verrou de stationnement (10) pour une boîte de vitesse de véhicule, comprenant une
roue de verrouillage de stationnement (12) pouvant être reliée de manière solidaire en rotation à un arbre de la boîte de vitesse de véhicule, comportant un cliquet de verrouillage (20), lequel peut être déplacé par rapport à la roue de verrouillage de stationnement (12) entre au moins une position de verrouillage sécurisant la roue de verrouillage de stationnement (12) contre une rotation et au moins une position de libération libérant la roue de verrouillage de stationnement (12) pour une rotation, comportant un piston d'actionnement (26), lequel peut être déplacé le long d'un axe de déplacement (32) par rapport à la roue de verrouillage de stationnement (12) et par rapport au cliquet de verrouillage (20), permettant ainsi de produire un mouvement du cliquet de verrouillage (20) entre la position de verrouillage et la position de libération, comportant un levier à cran (52), lequel peut être pivoté autour d'un axe de pivotement (54) par rapport au piston d'actionnement (26) entre au moins une position d'arrêt sécurisant le piston d'actionnement (26) contre un déplacement s'effectuant le long de l'axe de déplacement (32) comme première position et au moins une position de déverrouillage libérant le piston d'actionnement (26) pour un déplacement s'effectuant le long de l'axe de déplacement (32) comme seconde position et comportant un aimant de levage (56), au moyen duquel le levier à cran (52) peut être pivoté d'une des positions dans l'autre position,
l'axe de pivotement (54) s'étendant perpendiculairement à l'axe de déplacement (32),
l'aimant de levage (56) présentant au moins un élément magnétique (64), au moyen duquel un champ magnétique est ou peut être mis à disposition et au moins un élément d'actionnement (66), lequel peut être déplacé en translation au moyen du champ magnétique dans une direction d'action (40) par rapport à l'élément magnétique (64) et par rapport au levier à cran (52), permettant ainsi de pivoter le levier à cran (52) de l'une position dans l'autre position, la direction d'action (40) s'étendant parallèlement à l'axe de déplacement (32) ou coïncidant avec l'axe de déplacement (32),
**caractérisé en ce que**
l'aimant de levage (56), le levier à cran (52) et le piston d'actionnement (26) sont disposés l'un après l'autre le long de l'axe de déplacement (32) dans l'ordre suivant : aimant de levage (56), levier à cran (52), piston d'actionnement (26).

2. Dispositif de verrou de stationnement (10) selon la revendication 1,
**caractérisé en ce que**
le cliquet de verrouillage (20) peut être pivoté autour d'un axe de cliquet de verrouillage (22) entre la position de libération et la position de verrouillage et peut ainsi être déplacé, l'axe de cliquet de verrouillage (22) s'étendant perpendiculairement à l'axe de déplacement (32).

3. Dispositif de verrou de stationnement (10) selon la revendication 2,
**caractérisé en ce que**
la roue de verrouillage de stationnement (12) peut tourner autour d'un axe de rotation (24) dans la position de libération et est sécurisée contre une rotation s'effectuant autour de l'axe de rotation (24) au moyen du cliquet de verrouillage (20) dans la position de verrouillage, l'axe de rotation (24) s'étendant parallèlement à l'axe de cliquet de verrouillage (22).

4. Dispositif de verrou de stationnement (10) selon l'une des revendications précédentes, **caractérisé par**
une tige de piston (30) disposée coaxialement par rapport au piston d'actionnement (26) et pouvant être déplacée avec le piston d'actionnement (26) le long de l'axe de déplacement (32), laquelle présente au moins un évidement (68), dans lequel le levier à cran (52) peut être au moins partiellement logé dans la position d'arrêt, permettant ainsi de sécuriser le piston d'actionnement (26) contre un déplacement s'effectuant le long de l'axe de déplacement (32).

5. Dispositif de verrou de stationnement (10) selon la revendication 4,
**caractérisé en ce que**
le piston d'actionnement (26) est formé séparément de la tige de piston (30), est disposé sur la tige de piston (30) et est fixé au moins le long de l'axe de déplacement (32) sur la tige de piston (30).

6. Dispositif de verrou de stationnement (10) selon la revendication 5,
**caractérisé en ce que**
le piston d'actionnement (26) est pressé sur la tige de piston (30) et est ainsi fixé au moins le long de l'axe de déplacement (32) sur la tige de piston (30).

7. Dispositif de verrou de stationnement (10) selon l'une des revendications précédentes,
**caractérisé par**
un élément de déplacement (70) prévu en plus de l'aimant de levage (56), lequel peut être déplacé en translation hydrauliquement dans une direction de déplacement (38) s'étendant parallèlement à l'axe de déplacement (32) par rapport au levier à cran (52), permettant ainsi de pivoter le levier à cran (52) de la première position dans la seconde position ou de la seconde position dans la première position

8. Boîte de vitesse de véhicule, comportant un dispositif de verrou de stationnement (10) selon l'une des revendications précédentes.
